# EUROPEAN PATENT APPLICATION

(11) **EP 4 749 148 A1**
(43) Date of publication of application: **27.05.2026**
(21) Application number: 24214064.8
(22) Date of filing: 20.11.2024
(51) Int. Cl.: F16C 17/24, F16C 23/02

(54) **AN ADAPTIVE FLUID-FILM BEARING AND METHOD OF USE IN POWER GENERATION APPLICATIONS**

(71) Applicant: Cleveland State University, Cleveland, OH 44115 (US)
(72) Inventor: Sawicki, Jerzy T., Westlake, OH, 44145 (US); Chasalevris, Anthanasios, 15561 Cholargos-Athens (GR); Gavalas, Ioannis, 14231 Nea Ionia-Athens (GR)
(74) Representative: Forresters IP LLP

(57) **Abstract**

Various embodiments described herein provide for an adaptive fluid-film bearing that can more effectively reduce stress on couplings. To accomplish this, the adaptive fluid-film bearing includes an upper pad (202) and a lower pad (203) that together surround a journal shaft. Each pad is mounted on a screw (204, 212) that is affixed to a slider (206, 213). Each screw is attached to a first motor (207, 211), and each slider is attached to a second motor (208, 214) via a sliding joint. A first group of sensors is attached to the frame (210) of the bearing and measures the position of the journal, communicating the position with a first controller. Similarly, a second group of sensors is attached to the upper and lower pads and measures the position of the upper and lower pads, communicating the positions with a second controller. Based on a comparison of the static reference position of the journal and pads, the controllers can adjust the current position to reduce the stress on the couplings surrounding each bearing and thereby allow the machine to adapt to the changing environment.

## Description

### FIELD

The present inventive concept relates to turbomachinery and, more specifically, shaft-train systems used in power generation and marine propulsion and utilizing adaptive fluid-film bearings in those systems.

### BACKGROUND

Industrial turbomachinery is among the most popular machines for electric power generation. Typically, turbine rotors are coupled with a generator rotor, forming a shaft-train that can extend up to a hundred meters, depending on the power output. The dynamic design of such machines is subjected to strict regulations to ensure safe and reliable operation, with even more stringent restrictions on the dynamics for those designed to operate in nuclear power plants. An operational failure or defect resulting in a trip of operation of such machine can severely influence financial metrics. Therefore, such machines often adhere to conservative dynamic designs that guarantee continuous, safe, and smooth operation. However, this approach does not fully exploit the machine's potential thermal efficiency and lacks adaptability to changing operational parameters, such as foundation distortions, bearing pedestal shifts, or casing deformations. Further to that, any deviations in clearances between the rotor and stator or in the predicted bearing loads, whether occurring during assembly or long-term operation, cannot be accommodated by a fixed-geometry rotor-bearing system.

Oil-film bearings are the most common type used in power generation shaft trains. Their simplicity, reliability, cost-effectiveness, and damping properties have made them the preferred choice for over a century. Despite the maturity of sliding bearing technology, downtime due to bearing failures still remains considerable. The oil-film thickness generated between the rotating shaft (journal) and the bearing pads is a parameter of high influence to the operability of the machine. It affects the dynamic characteristics of the rotor support, impacting the entire dynamic system, and contributes to frictional power losses, which are always of a major concern.

In large turbomachines, the most common problems related to bearing operation are oil whirl instability and temperature rise (overheating). Because the mounted rotors are long and thin, dynamic instability can occur when the bearing load is not accurately predicted by the model. Additionally, unpredictable distortions in the casing (bearing pedestals) or/and foundation can cause instability issues through the well-known oil-whirl phenomena, as a consequence of load change or rotor-stator contact (dry whirl-whip) In such situations, conventional fixed-geometry sliding bearings can only be replaced by "more stable configurations." Each hour of maintenance or bearing retrofitting in these machines can cost tens of thousands of dollars.

One solution is a deviation from shaft-trains that rely on fixed geometry bearings, since they cannot accommodate any deviations from the expected operating status. Previous attempts have been made for actively or passively controllable or adjustable oil-film bearings, for example using active hydraulic supports or controllable tilting-pad configurations.

However, a controllable bearing is not necessarily a bearing that has controllable geometry. For example, it may only use active lubrication as a means to control rotor dynamics. However, these are limited to small systems, and cannot be considered for application in large turbomachinery due to load capacity. Another solution has been active magnetic bearings to support flexible rotating shafts. These too have their downsides however, and while they are being included in the standard designs of small turbomachines, they are still considered a concept by many after four decades of research. Another solution may be active hybrid bearings, which may have some potential to support large rotating shafts, though they remain untested.

Other patent applications have also attempted to solve this problem, albeit unsuccessfully. For example, WO2018/002277 also deals with suppressing vibrations of shafts using adjustable bearings, however it focuses on the principle of parametric excitation - a principle that can be realized in rotor systems by a specific type of barracks, though it focuses on the deployment of nonlinear dynamics to suppress vibrations and does not deal with the mechanics of actuation. In WO1995/029346, US 1,880,353, and US 3,604,767, the bearing portion is adjustable, but requires a user to adjust the pad by hand with screws, as is common in the industry, and does not deal with controllability and real time operation adjustments. Others have sought to change the performance of the lubrication area and its respective dynamic properties by changing the shape of the effective lubricating area, such as KR20190114087, or US 4,643,592 using radial positioning, though neither implements control measures. Others such as US 5,397,183 have used piezoelectric actuators for radial positioning. However, piezoelectric actuators cannot accommodate the loads generated in steam turbines and is thus not currently a realistic solution. Others such as CA 3089086 disclose a mechanism without a control or implementation scheme and do not take into account performance criteria when determining the control path.

Thus, despite the variety of solutions for adaptivity of rotor dynamics through active oil-film bearings, there still exists a need for a real-time adaptive dynamic bearing system.

### SUMMARY

The following is a brief summary of subject matter that is described in greater detail herein. This summary is not intended to be limiting as to the scope of the claims.

Various embodiments described herein provide for an adaptive fluid-film bearing that can more effectively reduce stress on couplings by aligning the shaft train. To accomplish this, the adaptive fluid film bearing includes an upper pad and a lower pad that together surround a journal shaft. Each pad is mounted on a screw that is affixed to a slider. Each screw is attached to a first motor, and each slider is attached to a second motor via a sliding joint. A first group of sensors is attached to the frame of the bearing and measures the position of the journal, communicating the position with a first controller. Similarly, a second group of sensors is attached to the upper and lower pads and measures the position of the upper and lower pads, communicating the positions with a second controller. Based on a comparison of the static reference position of the journal and pads, the controllers can adjust the current position to reduce the stress on the couplings surrounding each bearing by aligning the shaft-train and thereby allow the machine to adapt to the changing environment.

In an additional embodiment, the invention comprises a method of actively aligning a shaft train that includes creating a database of lookup values made up of values associated with a bearing, and creating a model of reference values made up of the journal and the upper and lower bearing pads around the journal. The reference values are created from a static placement of the journal during the initial operation of the train. During operation, a first data set comprising the position of the journal shaft at a bearing is received from a first plurality of sensors, and a second set of data comprising the positions of the upper and lower pads of the bearing is received from a second set of sensors, and compared to the reference values. The journal and bearings are then realigned according to the database.

In another embodiment, a system for an adaptive fluid-film bearing system includes a shaft train with a journal shaft and one or more bearings disposed along the shaft. Each bearing has an upper pad opposite a lower pad, so the two together surround the journal shaft. The lower pad is mounted on a rotatable lower screw, which is connected to a conical thrust-roller bearing, which is itself connected to a lower bearing slider. The lower screw is connected to a first lower motor via a gear joint in a way that the first lower motor rotates the lower screw. The first lower motor is mounted in the lower bearing slider. The upper pad is mounted on a rotatable upper screw, which is connected to an upper bearing slider. The upper screw is connected to a first upper motor via a gear joint in a way that the first upper motor rotates the upper screw. The upper lower is connected to a second upper motor via an upper sliding joint and the lower slider is connected to a second lower motor via a lower sliding joint, and the upper and lower sliding joints are attached to a bearing frame. A first group of sensors is connected to a first controller and has data regarding the horizontal and vertical positions of the journal shaft. A second group of sensors is connected to a second controller and has data regarding the horizontal and vertical positions of the upper and lower pads. Both the first and second controller are connected to a model that has a database of reference values is programmed to compare a first set of data from the first controller and a second set of data from the second controller to the reference values and realign the journal and bearing according to those comparisons.

The above summary presents a simplified summary in order to provide a basic understanding of some aspects of the systems and/or methods discussed herein. This summary is not an extensive overview of the systems and/or methods discussed herein. It is not intended to identify key or critical elements or to delineate the scope of such systems and/or methods. Its sole purpose is to present some concepts in a simplified form as a prelude to the more detailed description that is presented later.

### BRIEF DESCRIPTION OF THE DRAWINGS

Fig. 1 shows an overall schematic view of a power generation shaft-train.
Fig. 2 shows a mechanical layout of a bearing according to the general inventive concepts.
Fig. 3 shows an exploded isometric view of the bearing of Fig. 2.
Fig. 4A shows a schematic view of operating mode A.
Fig. 4B shows a schematic view of operating mode B.
Fig. 4C shows a schematic view of combined operating mode.
Fig. 5A shows a layout of the first sensor group on the bearing.
Fig. 5B shows a layout of the second sensor group on the bearing.
Fig. 6 shows the location of the sensors along the shaft train.
Fig. 7 shows a flow chart illustrating the actions of the two controllers.
Fig. 8 shows an exemplary database of the operating map of the bearing.
Fig. 9 shows how the database operating map functions in conjunction with the bearings and shaft train.

### DETAILED DESCRIPTION

Various technologies pertaining to an adaptive fluid-film bearing using a series of motorized pads in communication with a model are now described with reference to the drawings, wherein like reference numerals are used to refer to like elements throughout. In the following description, for purposes of explanation, numerous specific details are set forth in order to provide a thorough understanding of one or more aspects. It may be evident, however, that such aspect(s) may be practiced without these specific details. In other instances, well-known structures and devices are shown in block diagram form in order to facilitate describing one or more aspects. Further, it is to be understood that functionality that described as being carried out by certain system components may be performed by multiple components. Similarly, for instance, a component may be configured to perform functionality that is described as being carried out by multiple components.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Further, as used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices. Additionally, as used herein, the term "exemplary" is intended to mean serving as an illustration or example of something and is not intended to indicate a preference.

It is an aspect of the invention to establish the optimum load for stable operation of rotor-bearing systems in turbomachinery, among other applications. The active positioning of the effective lubrication areas (i.e., the bearing pads), allows displacement of the shaft in the vertical direction (i.e., a change in elevation), displacement of the shaft in the horizontal direction, change of pad geometric preload and the change of pad offset. This type of bearing allows for the accommodation of any unexpected foundation displacements (or non-accurate foundation erection) and establishment of an operation with minimum frictional power loss, and optimal load in the bearings. Further, the bearing ensures continuous operation at a specific desired damping ratio, ensuring adaption of the machine to a changing environment, reducing the risk of each operational trip, extending maintenance intervals, and saving significant amounts of energy that would otherwise be wasted in less efficient conventional systems.

The bearing ensures the rotating shaft remains at a specific position, and in doing so, keeps the bearing load (i.e., the resulting oil film impedance force) and the subsequent bearing stiffness and damping forces (e.g., the oil film properties) at a desired value. This, in turn, keeps the damping ratio at a specific value, and by applying the appropriate configuration of the effective lubrication surfaces, in this case the pad surfaces, the bearing is able to adjust the frictional forces developed by the oil film shearing as applied to the journal's surface.

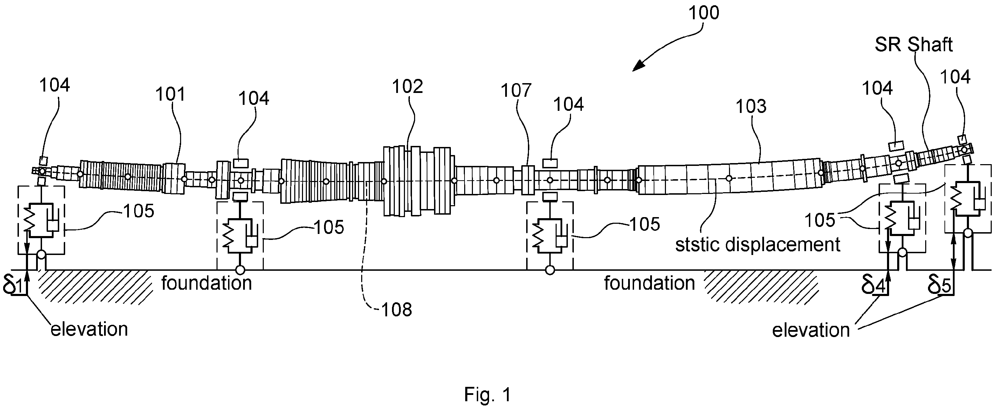

Referring now to **Fig. 1****,** there is shown an overview of a power generation shaft-train 100. A typical steam turbine-generator shaft train is a rotating system that includes three rotors, including a high pressure rotor 101 with a rotating shaft and blades, an intermediate/low pressure rotor 102 with a rotating shaft and blades, and a generator rotor 103 with rotating wiring. The shaft-train 100 is mounted on multiple sliding bearings, 104. Each bearing is installed on a rigid pedestal 105. Each pedestal 105 is typically a compliant structure that has the potential to influence the rotor dynamic behavior, although there are cases that the dynamic behavior is not included in the standard design. As such the pedestal properties such as stiffness and damping were not included in the dynamic model used to test the efficacy of the proposed novel bearings.

Each rotor is coupled to the other via a pair of rigid couplings. Specifically, rotor 101 is coupled to rotor 102 via coupling 106; rotor 102 is coupled to rotor 103 via coupling 107. The bending moment in coupling 106 and coupling 107 is minimized by performing a standard procedure of static alignment, as illustrated via the alignment axis 108. Alignment is achieved by elevating the bearings 104 on the ends of the shaft-train while the center bearings remain in a reference location.

The dynamic model takes into account multiple elements, such as each rotor considering a variation in the material elastic properties depending on its location, while a temperature distribution is accounted for with the reduction of the Young's modulus at each finite element (e.g., each node discretized along the shaft train). During the process of static alignment, the journal is assumed to be positioned concentrically at each bearing 104. The journal's position creates a bearing load, which is assumed to be constant during operation regardless of speed. However, during operation the journal's eccentricity (i.e., movements while operating) will cause small divergences in the bearing loads. The bending momentum and shearing force are evaluated at the front and rear faces of every finite element and are used to calculate the alternating stress at each rotor segment. The model calculates a stress utilization factor, which is defined as the ratio of the alternating stress to the material endurance strength. It is evaluated considering the stress intensity factor and a selected factor of safety. Acceptable values for the stress utilization are below 80%, although as the temperature rises, the strength and stiffness of the shaft material is reduced.

Excitation due to unbalance in the shaft-train can cause displacement throughout; as such, the dynamic model takes into account nine unbalance planes of the shaft train. That is to say, for each rotor there are three unbalance cases that are defined: a) a single, b) pair, and c) triple unbalance, creating a total of nine unbalance cases. The unbalance magnitude of each rotor follows the ISO definition U = M *G / (sigma). In this case, (sigma) is 377 rads/s, and M is defined by the sum mass of all existing elements between two sequential bearings. The equations of motion have a nonlinearity which stems from the bearing impedance forces (i.e., oil film impedance forces) which are nonlinear functions of the journal displacement and velocity. The number of degrees of freedom of the rotor model can be reduced by applying static condensation while retaining two master degrees of freedom (transverse displacements) per selected master node. The condensed system shares identical static displacement and stiffness properties to the full system, and similar dynamical properties as each rotor's slenderness ratio is higher than 10. Static condensation is selected as the model order reduction algorithm due to the fact that the system is comprised of slender shafts where the static displacement dominates the dynamic response. The master nodes are located in bearing locations and in unbalance planes (at least) where dynamic forces act.

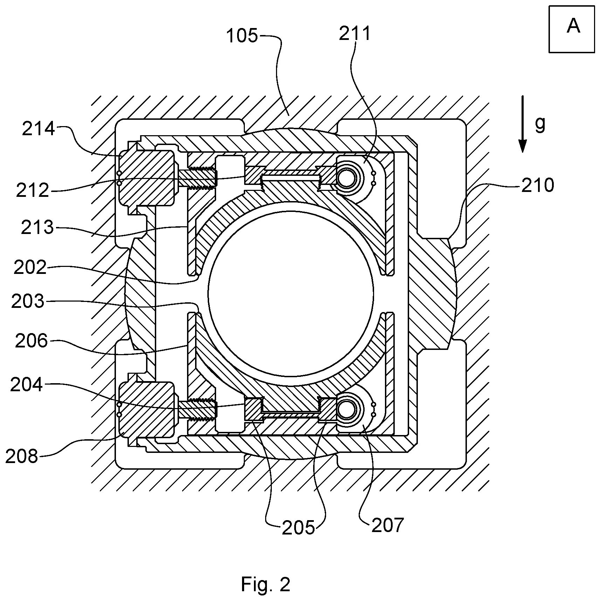

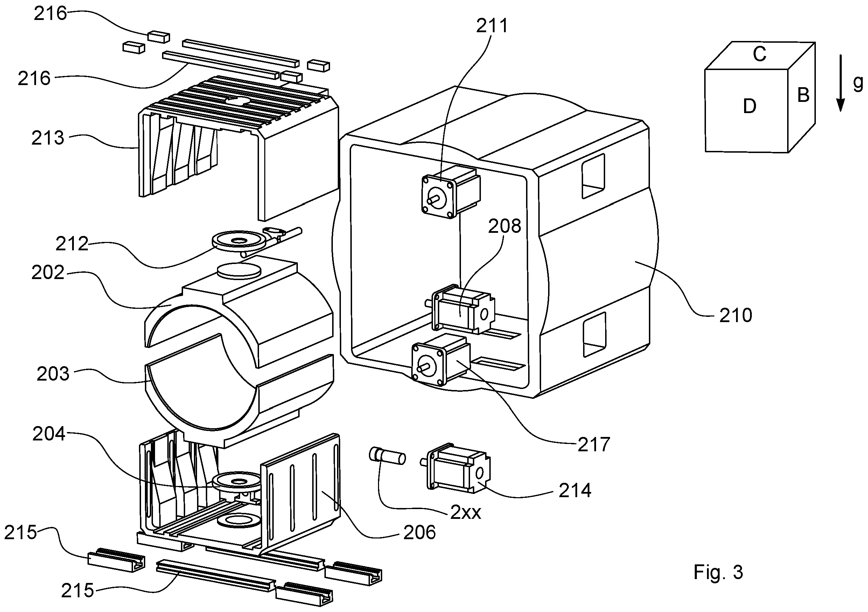

Referring now to **Figs. 2** **and** **3****,** **Fig. 2** shows a mechanical layout of the bearing, while **Fig. 3** shows an exploded isometric view of the assembly of the bearing. Referring to Fig. 2, the image is oriented face on, with gravity pointed down, as indicated. Referring to Fig. 3, the view is oriented isometrically, and in reverse to the image shown in Fig. 2 (*i.e*., from the back). The journal 201 (*i.e*., the portion of the rotating shaft inside the bearing) is mounted on two oil films. One oil film is established between the journal 201 and the upper pad 202; the other oil film is established between the journal 201 and the lower pad 203. While the journal 201 remains centrally positioned in Fig. 2, during machine operation it experiences eccentricity with respect to the bearing center. This is shown in later figures. Focusing on the lower half of the bearing, the lower pad 203 is mounted on a lower screw 204 which has the ability to rotate. The lower pad 203 has an external thread configuration in its lower side, while the lower screw 204 has an internal thread configuration in its upper side, such that the two fit together and the lower screw 204 has the ability to rotate the lower pad 203. The lower side of the lower screw 204 is mounted in the bearing frame via a conical thrust roller bearing 205 which allows the accommodation of vertical and of horizontal loads, while the lower side of the thrust bearing 205 is fixed to the lower bearing slider 206. The lower screw 204 is preferably rotated by a worm gear joint, which is rotated by the first lower motor 207. The first lower motor 207 is mounted in the lower bearing slider 206. The lower bearing slider 206 is free to slide in the horizontal direction on the inner lower surface of the bearing frame 210, and the first lower motor 207 defines its positioning.

The upper half of the bearing largely mirrors the lower half of the bearing. Still considering **Figs. 2** **and** **3****,** the first upper motor 211 drives the worm gear joint in the upper half of the bearing, and rotates the upper screw 212. The upper screw 212 is mounted in its upper part to the upper slider 213. However, unlike in the corresponding lower complex of the bearing, there is no thrust bearing incorporated into the upper slider 213 because the load in the upper pad 202 is much lower than in the corresponding in the lower pad 203. The upper screw 212 rotates in response to the first upper motor 211, and has an inner thread configuration in its lower side configured to sit atop the upper bearing pad 202. In this way, the upper screw 212 can displace the upper pad 202 vertically downwards or upwards, depending the rotation direction of the upper screw 212. The complex consisting of the upper slider 213, the first upper motor 211, the upper screw 212, and upper pad 202, can also move horizontally via a sliding joint to the bearing frame 210. Both the upper slider 213 and the lower slider 206 can each be displaced by the rotating motion of a second upper motor 214 and a second lower motor 208, respectively. In similar ways, both the upper slider 213 and lower slider 206 communicate with each respective motor via an inner thread joint, the lower sliding joint 215 and upper sliding joint 216, which each respective motor is affixed into. Additionally, both the second upper motor 214 and second lower motor 208 are each affixed to the bearing frame 210. The bearing frame 210 is mounted with bolt joints and interference fit to the pedestal 105. This allows the pedestal 105 and bearing frame 210 to be considered without relative motion. A typical dimension of the journal diameter can be considered from 100 to 400mm in common applications in turbomachinery for power generation.

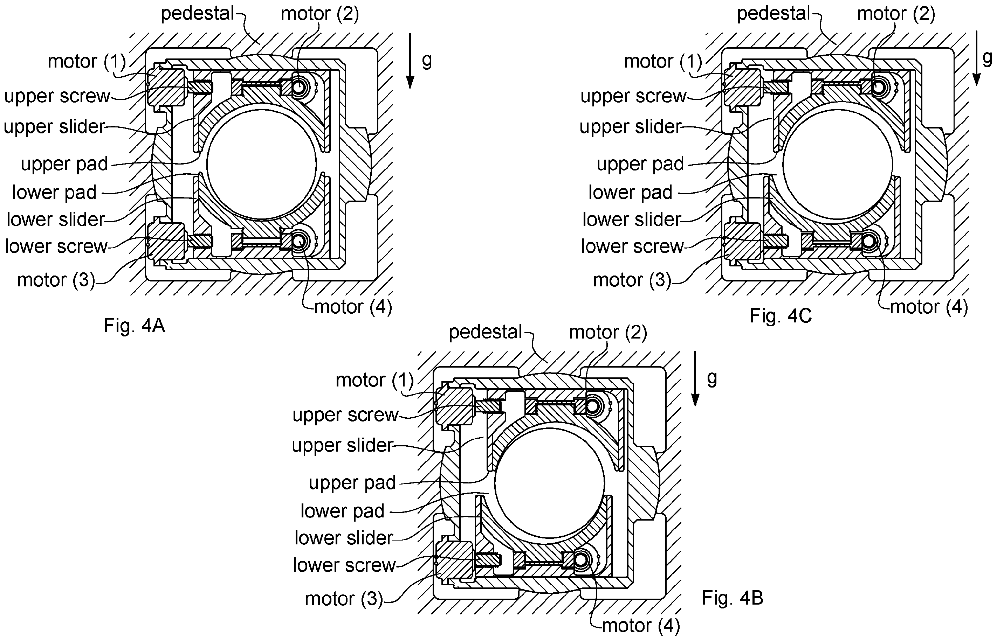

Referring now to **Figs. 4A, 4B,** and **4C****,** there is shown a schematic view of the bearing operating in Mode A, Mode B, and C, respectively. Utilizing the algorithm and model described further herein, the bearing operates in two main modes, Mode A and Mode B. **Fig. 4A** illustrates the bearing in Mode A. In Mode A, both the lower and upper pad performs the same vertical or horizontal displacement in order to apply displacement of the journal (not shown in the figure). Thus, Mode A is the elevation mode. Looking at the bearing from the top (direction of gravity), the upper screw rotates counterclockwise, such that it is approaching the upper slider, and the lower screw rotates counterclockwise, moving away from the lower slider. Both upper and lower pads move vertically upwards. Assuming that the vertical displacement of the pads is equal, the effective lubrication area moves vertically upwards, and the bearing will obtain more load from the shaft to the bearing. In this way, Mode A results in loading the bearing or displacing the rotor horizontally. Conversely, moving the pads vertically downwards will result in unloading the bearing. The displacement of pads is supposed to occur quasi-statically. Note that both upper and lower pads are allowed to slide in response to the corresponding upper and lower slider.

**Fig. 4B** illustrates Mode B. In Mode B, the upper slider causes the upper pad to move horizontally to the right, and the lower slider causes the lower pad to move horizontally to the left. Thus, Mode B is the offset mode. In a counterclockwise rotating journal, the displacement of the pads will result in increasing the effective eccentricity of the bearing (increasing the wedge of the oil film), resulting in a bearing configuration referred to as "offset halves." This configuration enhances the stability of the bearing but may result in the increase of lubricant temperature. Moving from left to right, motor (1) rotates counterclockwise, and pushes the upper slider away from the motor, while motor (3) rotates clockwise, pulling the lower slider near the motor. Furthermore, in Mode B, the two pads can reduce or increase their distance in vertical direction, which changes the effective radial clearance of the bearing, and thus the geometric preload of the bearing.

**Fig. 4C** illustrates a combined operating version of Mode A and Mode B. Combining Mode A and Mode B allows the bearing pads to obtain any location with respect to the rotor, which allows for loading and unloading of the bearing, horizontal or vertical movement of the journal and shaft, and the simultaneous application of a desired preload and offset. This is advantageous because it allows for the adjustment of the bearing at optimal configuration (with respect to stability, vibration amplitude, power loss, and temperature rise). The vertical and horizontal alignment of the bearing center also allows for alignment of the rotor, which allows for optimal loading and avoids rotor-stator contact. Further, this simple adjustment mechanism can be integrated without the need for hydraulic or pneumatic systems, as all adjustments are made following online parameter estimation through a smart control scheme that takes into account specific objective functions and constraints (as discussed further below).

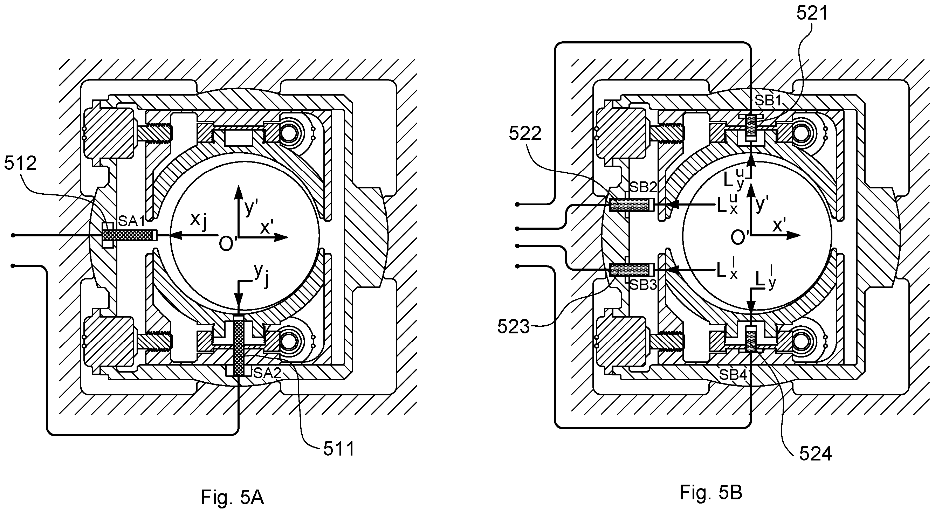

Referring now to **Figs. 5A****and** **B**, there is shown the location of two groups of sensors on the bearings. Inductive proximity sensors are required for the acquisition of rotor response and of the pads' position(s). Specifically, in the illustrated embodiment, two groups of sensors are required: a first set of proximity sensors are used to measure the absolute response of the rotor in each bearing, as displayed in Fig. 5A, while a second set of proximity sensors, as illustrated in Fig. 5B, measure the horizontal and vertical displacement of the upper and lower pads. Those of ordinary skill in the art will recognize that, depending on the needs and configuration of the particular system, more or less sensors may be utilized, in larger or fewer groups.

In this particular embodiment, as shown in Fig. 5A, the first sensor group acquires a first set of data comprising the position of the journal shaft at the bearing. In the illustrated embodiment, the first sensor group is comprised of two sensors, a central vertical sensor 511, which measures the absolute movement of the journal vertically, and a central horizontal sensor 512, which measures the absolute movement of the journal horizontally. The second sensor group, as shown in Fig. 5B, is comprised of four sensors: an upper horizontal sensor 522, an upper vertical sensor 521, a lower horizontal sensor 523, and a lower vertical sensor 524. The second sensor group acquires a second set of data comprising the positions of the upper and lower pads. Specifically, the upper horizontal sensor 522 measures the absolute movement of the upper pad horizontally, while the upper vertical sensor 521 measures the absolute movement of the upper pad vertically. Similarly, the lower horizontal sensor 523 measures the absolute movement of the lower pad horizontally and the lower vertical sensor 524 measures the absolute movement of the lower pad vertically.

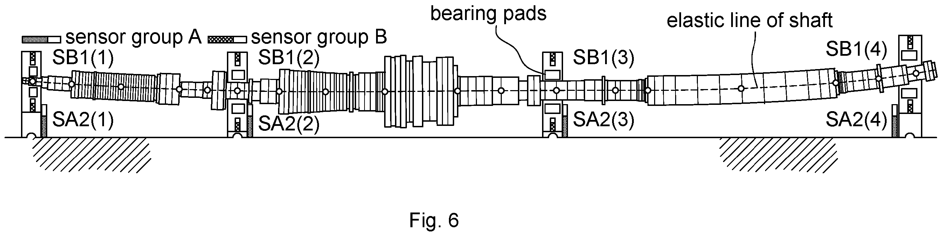

Preferably, all sensors embedded at each bearing are able to measure at a range of 0-2 mm with a sensitivity of 1-5 um with the exception of the central vertical sensor 511 and the lower vertical sensor 524 which should measure in a range of 0-5 mm. Those of ordinary skill in the art will recognize that, depending on the needs and configuration of the particular system, measurement tolerances and sensitivities may vary. **Fig. 6** illustrates how the sensors are preferably disposed at each bearing along the entire length of the shaft-train.

Prior to use, the sensors are tuned at reference values that correspond to the static alignment of the shaft train, as seen in Fig. 6. In order to tune the sensors, the first set of sensors, 511 and 512, measure the absolute displacement of the journal with respect to a global coordinate system fixed at the foundation. The rotor is placed into the lower pad of each bearing during the erection of the machine prior to coupling; leafs are embedded between the journal and pad to avoid scratches in the pads and to ensure the journal is centrally disposed along the pad. Then the lower pads are elevated such that the coupling flanges are aligned. This minimizes the shearing force generated when the rotors are coupled.

The lower pads of each bearing on each end of the shaft train are elevated to ensure the coupling flanges are parallel to one another. Should the coupling flanges at a coupling become eccentric, this is corrected by elevating the respective bearing pad. Parallelization of coupling flanges is relatively reliable in most shaft-train systems. At this point, the rotors are coupled together, and the shaft-train is statically aligned, such that the coupling flanges receive minimal shearing force and bending moment. At this point, the measurements received from the central horizontal sensor 512 and central vertical sensor 511 are recorded as the static reference points for the absolute position of the journal in the horizontal and vertical directions, respectively. Note that at this stage the rotor is also centralized with respect to the casing; the casing manufactured to follow the path of the elastic line of the rotors.

The upper half of each bearing (*i.e*., the upper pads, upper slider, etc.) is then installed (including leafs between each upper pad and the respective journal). With the leafs still between each pad the respective journal the shaft train is still statically aligned. However, once the leafs are removed from all pads, small bending moments and shearing force is produced in the couplings due to the unequal clearance amongst all the bearings, which will often cause the shaft train to fall out of alignment. However, manufacturers provide a reference configuration, and this can be used to realign the shaft train. The bearing pads at each bearing receive the reference configuration of preload and offset and then the pads of each journal are displaced in locked relative position to each other such that the central horizontal sensor 512 and central vertical sensor 511 can again record their reference value. This allows the train to be statically aligned once more even though the pads are not at the same position as they were previously. At this point, the second sensor group records the pads' positions as a reference value. Once that value has been recorded, the machine can start operating at a low rotating speed. As the shaft-train continues to function, two controllers receive feedback from the sensors and ensure the shaft-train remains aligned by directing the individual motors and screws in the bearing to adjust the pads to compensate for undesirable movement/position of the journal as described in Fig. 4A-C.

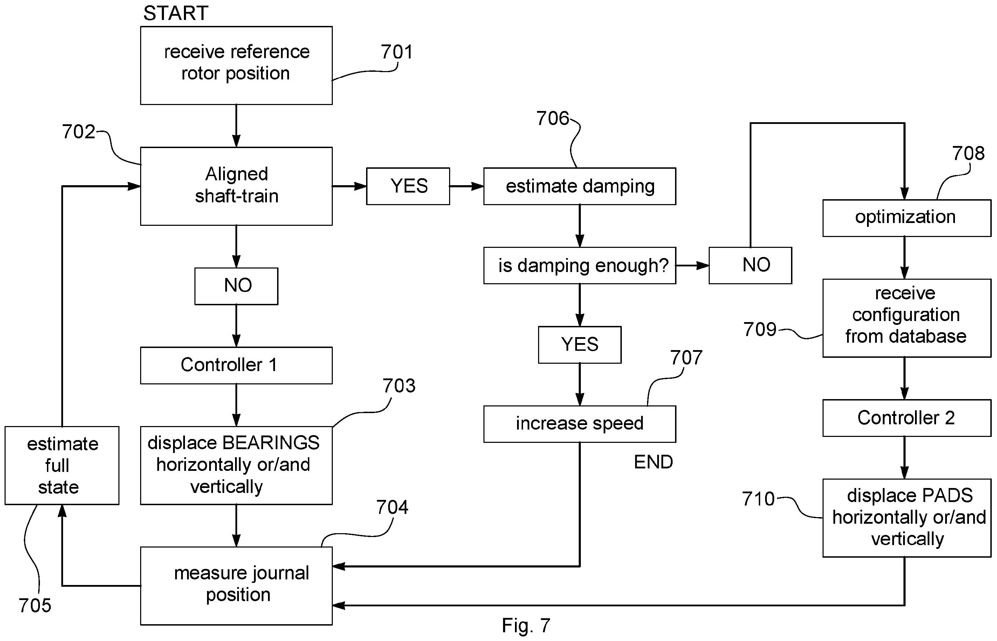

Referring now to **Fig. 7****,** there is shown a flow chart that illustrates the model and resulting actions for the two controllers. Control is consistently implemented in the shaft train by two feedback loops, each of which feeds into a controller. The first controller is responsible for displacing the bearings horizontally and/or vertically to locate each journal inside each bearing at specific positions in the global coordinate system (as calculated with respect to the foundation and casing). The first controller measures the journal's positions using the first set of sensors illustrated in Fig. 5A. An example of the first controller adjustments is shown in Mode A in Fig. 4A. The second controller is responsible for displacing the upper and lower pads horizontally and/or vertically to locate both pads at each journal at a specific displacement with respect to the bearing frame at a reference state for the pads. The second controller measures the pads positions using the second set of sensors illustrated in Fig. 5B, and an example of the second controller's adjustments is shown in Mode B in Fig. 4B.

The first controller applies active alignment of the shaft train in order to satisfy minimal coupling moment and optimal bearing load regardless of distortions, while the second controller applies the appropriate pad configuration so as to satisfy stability and power loss. Active alignment is required to ensure the desired loading at all bearing regardless of the film thickness in the bearings or the foundation set, while the desired damping ensures smooth and safe operation.

Note that the first controller will displace the two bearing pads in a "locked" position to one another, wherein the specific position of each pad has been defined by the second controller. The first controller receives the full reference state of the system, as estimated by journal position measurements made during the alignment. As the pads continue to follow the motion of the shaft train, the first controller works to minimize error while maintaining the pads in a locked position to each other at each bearing. The journals' equilibrium position is controlled by the first controller, which uses the time averaged absolute journal displacement measurements as input. This allows for an approximation of a quasi-static journal equilibrium while evaluating the proper lower and upper pad motor angular displacements at each bearing. The time averaging is performed over a moving window of sufficient length in order to reduce the effects of noise contamination such that the displacements relative to the equilibrium have a small average. Thus, assuming a large enough window length is selected, the first controller is robust against increasingly noisy signals due to the time averaging. The first controller is similarly robust against increasing unbalance values assuming the displacements are symmetrical around an equilibrium, as is standard.

It is important to note that the adaptive dynamics method does not work on a closed feedback loop to stabilize the system with pole placement. The control is required only to position the bearing pads at a specific configuration, which guarantees stability because it is continuously verified. In other words, the bearing pads retain their position at a constant operating speed, despite any variance in unbalance. Although the model could have been written using a controller for specific pole placement and resulting damping ratio of the closed system, the elements are acquired as the average value of the respective displacement after some periods of unbalance oscillation. This is actually cancelling unbalance excitation from the first controller and allows the first controller to operate in much larger time intervals than the data acquisition time interval in which the state is recorded. This is necessary because the actuators and motors must not perform continuous motion during rotor whirling, as this would raise a significant reliability issue. Thus, stability cannot be adjusted by the controller during this time; however, this is not required when the system is at a low speed and no oil-whirl instability can occur.

After the system is positioned at the desired aligned state, the rotor will increase speed in a slow run-up rate. During this run-up the first controller is responsible for retaining journal equilibrium and accommodating the oil film thickness growth due to the increase of speed. After the damping ratio reaches a predetermined point at a specific speed, the second controller is then engaged.

Once the second controller engages, it positions the pads in such a configuration that the resulting dynamic properties of the oil films renders the desired damping ratio in the system below a certain threshold. Specifically, the second controller realigns the journal and bearings according to a table of lookup values, described in further detail below. Ideally, the table of lookup values will contain one or more existing configurations of the pads that will not change the absolute position of the journals, as there are possible combinations of pad configurations which render different dynamic properties but retain the static equilibrium. However, if a bearing pad configuration that retains the absolute position of the journals is not available, the first controller will take over and reposition appropriately, as, ideally, the first controller is always engaged.

Continuing to refer to **Fig. 7**, at the start of the loop, the first step 701 has both controllers receive the reference information regarding the rotor position. From there, in step 702 it is determined whether the shaft-train is aligned. If it is not aligned, then the first controller implements step 703 to displace the bearings horizontally or vertically, wherein the bearings are in a locked position to one another. From there, in step 704, the journal position is remeasured, and in step 705 the full state of the shaft-train is estimated. If the shaft-train is aligned, then at step 706 the damping of the shaft-train is estimated. If the damping is sufficient, then the rotors may increase the speed in step 707 before returning to step 704 to re-measure the journal's position. However, if the damping is not sufficient, then the second controller will initiate an optimization routine in step 708, where it will receive configuration information in step 709 and then displace the pads horizontally and/or vertically in step 710 appropriately, before returning to step 704 to re-measure the journal's position. In this way, the controllers help realign both the journal and bearings.

The index for damping is selected to be a predetermined stability factor. The corresponding damping ratio should be the lowest damping ratio existing in the controlled shaft-train during operation.

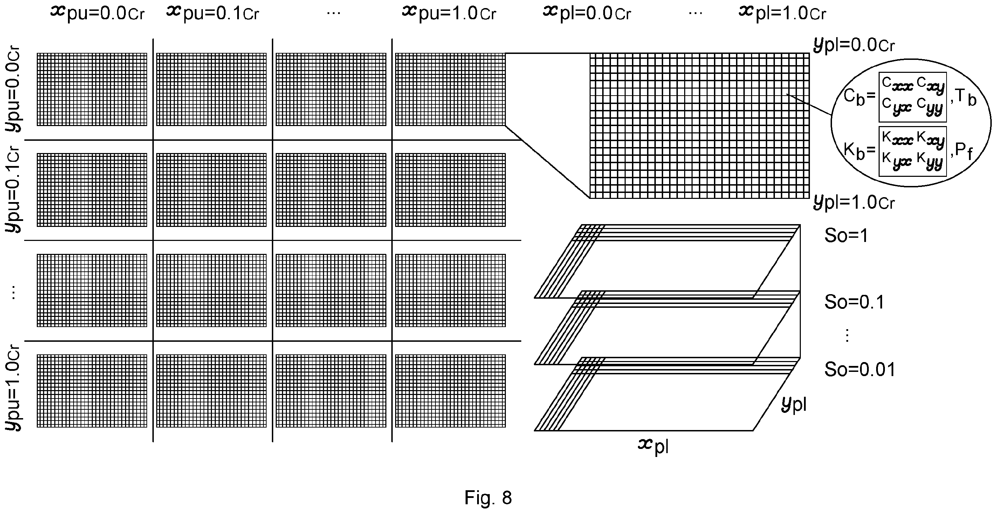

Referring now to **Fig. 8****,** there is shown an exemplary database which defines the operating map for each bearing. This database functions as a lookup table, and is composed based on the pad design, operation, equilibrium point, and controller output. These can be used to calculate the damping ratio of each pad. In step 709, the second controller selects the appropriate configuration for the pads based on the lookup table shown in Fig. 8 and does so based on the damping ratio.

Selection of bearing pad configuration was evaluated via the dynamic model while seeking to establish a high stability factor. Calculations determined that the highest stability factor is associated with the lowest damping ratio and a low stability feature. The bearing pad configuration is evaluated from the model with local linearization around the fixed-point equilibrium at different constant rotating speeds. At a lower rotating speed, there are several combinations of bearing configurations that render a stable system. At higher speeds, such as at operating speed, the combinations that render a stable system are found in a smaller area, which corresponds to a higher preload and a lower offset. In addition to seeking the lowest stability factor and highest stability feature, the dynamic model may also include an optimization procedure that seeks to concurrently minimize total frictional power loss in the bearings, or take into account temperature rise, minimum oil-film thickness, or other.

The model seeks an optimal solution for each speed the machine runs at, and as such will perform random searches seeking better configurations with respect to the stability factor and frictional power loss. For each iteration of the random search, the parameter estimation will render the actual damping ratio of the system. Regarding the frictional power loss, in these machines the instantaneous power output is measured with high accuracy (less than 1kW resolution). The random search can be performed without time constraints and wide set of data can be established. Additionally, the utilization of machine learning techniques can aid in rendering the actual optimal operating configuration.

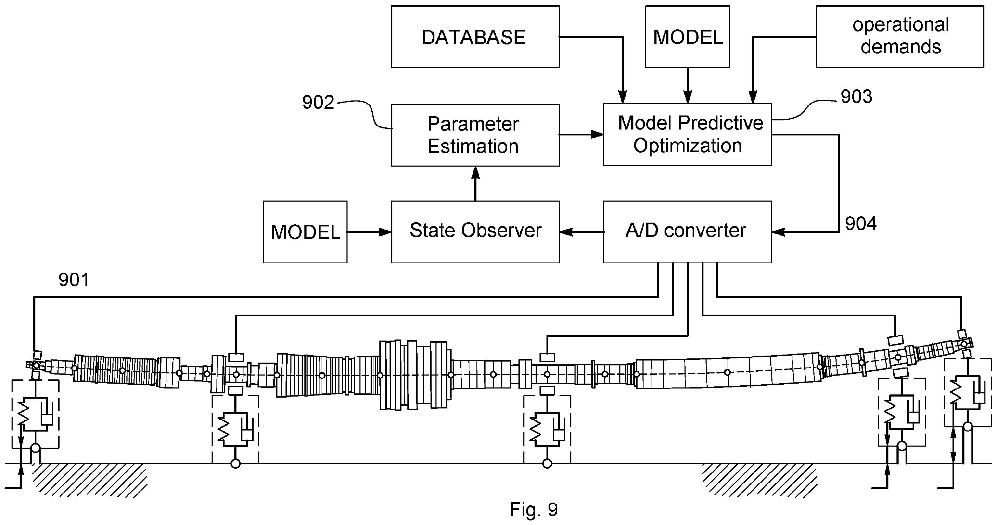

Referring now to **Fig. 9****,** there is shown a schematic that illustrates how the database operating map functions in conjunction with the bearings and the shaft train. The sensors provide information regarding the position of the journals and the bearing pads 901. From there, a parameter estimation is calculated 902. Based on the operational demands of the shaft-train, as well as the reference information provided in the database and the model, a predictive optimization is calculated 903. Once the calculations are made, they are fed back into the journals and pads such that they are positioned and configured accordingly 904.

Aspects of the present disclosure will now be described with reference to the following numbered clauses, which may be combines together without limitation:
1. An adaptive fluid-film bearing, comprising:
   an upper pad disposed opposite a lower pad, such that the two pads together circumscribe a journal shaft;
   wherein the lower pad is mounted on a rotatable lower screw;
   the rotatable lower screw affixed to a conical thrust roller bearing;
   the thrust roller bearing affixed to a lower bearing slider;
   wherein the lower screw is in communication with a first lower motor via gear joint, such that the first lower motor rotates the lower screw;
   wherein the first lower motor is mounted in the lower bearing slider;
   wherein the upper pad is mounted on a lower side of a rotatable upper screw;
   the upper screw affixed to an upper bearing slider;
   the upper screw in communication with a first upper motor via gear joint, such that the first upper motor rotates the upper screw;
   wherein the upper slider is in communication with a second upper motor via an upper sliding joint;
   wherein the lower slider is in communication with a second lower motor via a lower sliding joint;
   wherein the upper sliding joint and the lower sliding joint are each affixed to a bearing frame;
   a first plurality of sensors affixed to the bearing frame, configured to measure the position of the journal shaft horizontally and vertically;
   the first plurality of sensors in communication with a first controller, such that the first controller has data comprising the horizontal and vertical position of the journal shaft;
   a second plurality of sensors affixed to the upper pad and the lower pad, configured to measure the position of the upper pad and lower pad horizontally and vertically;
   the second plurality of sensors in communication with a second controller, such that the second controller has data comprising the horizontal and vertical positions of the upper pad and lower pad;
   the first controller and second controller in communication with a model;
   the model configured to compensate for displacement along the journal shaft.
2. The adaptive fluid film bearing of clause 1, wherein the first plurality of sensors comprises:
   a central horizontal sensor configured to measure the position of the journal shaft horizontally; and
   a central vertical sensor configured to measure the position of the journal shaft vertically.
3. The adaptive fluid film bearing of clause 1 or clause 2, wherein the second plurality of sensors comprises an upper horizontal sensor, an upper vertical sensor, a lower horizontal sensor, and a lower vertical sensor.
4. The adaptive fluid film bearing of clause 3, further comprising:
   the upper horizontal sensor affixed to the upper pad and configured to measure the position of the upper pad horizontally;
   the upper vertical sensor affixed to the upper pad and configured to measure the position of the upper pad vertically;
   the lower horizontal sensor affixed to the lower pad and configured to measure the position of the lower pad horizontally; and
   the lower vertical sensor affixed to the lower pad and configured to measure the position of the lower pad vertically.
5. The adaptive fluid film bearing of any preceding clause, wherein each motor is a servo motor.
6. The adaptive fluid film bearing of any preceding clause, wherein the gear joint is a worm gear joint.
7. The adaptive fluid film bearing of any of clauses 2 to 6, wherein the central horizontal sensor is disposed atop the bearing frame and central vertical sensor is disposed along a side of the bearing frame.
8. A method of active alignment of a shaft-train, comprising:
   creating a database of lookup values comprised of values associated with a bearing;
   creating a model of reference values comprised of a position of a journal and an upper and lower bearing pad around the journal;
   wherein the reference values are created from a static placement of the journal during initial operation of the train;
   during operation, receiving from a first plurality of sensors, a first set of data comprising the position of the journal shaft at a bearing;
   receiving from a second plurality of sensors, a second set of data comprising the position of an upper pad of the bearing and the position of a lower pad of the bearing;
   comparing the received data to the reference values;
   realigning the journal and bearings according to the database of lookup values.
9. The method of clause 8, wherein the first plurality of sensors comprises:
   a central horizontal sensor configured to measure the position of the journal shaft horizontally; and
   a central vertical sensor configured to measure the position of the journal shaft vertically.
10. The method of clause 8 or clause 9, wherein the second plurality of sensors comprises:
   an upper horizontal sensor affixed to the upper pad and configured to measure the position of the upper pad horizontally;
   an upper vertical sensor affixed to the upper pad and configured to measure the position of the upper pad vertically;
   a lower horizontal sensor affixed to the lower pad and configured to measure the position of the lower pad horizontally; and
   a lower vertical sensor affixed to the lower pad and configured to measure the position of the lower pad vertically.
11. The method of any of clauses 8 to 10, wherein the first set of data comprises the horizontal and vertical positions of the journal shaft.
12. The method of any of clauses 8 to clause 11, wherein the second set of data comprises the horizontal and vertical positions of the upper and lower pads.
13. An adaptive fluid film bearing shaft-train system comprising:
   a shaft train comprising a journal shaft;
   one or more bearings disposed along the journal shaft;
   each bearing comprising:
      an upper pad disposed opposite a lower pad, such that the two pads together circumscribe the journal shaft;
      wherein the lower pad is mounted on a rotatable lower screw;
      the rotatable lower screw affixed to a conical thrust roller bearing;
      the thrust roller bearing affixed to a lower bearing slider;
      wherein the lower screw is in communication with a first lower motor via gear joint, such that the first lower motor rotates the lower screw;
      wherein the first lower motor is mounted in the lower bearing slider;
      wherein the upper pad is mounted on a lower side of a rotatable upper screw;
      the upper screw affixed to an upper bearing slider;
      the upper screw in communication with a first upper motor via gear joint, such that the first upper motor rotates the upper screw;
      wherein the upper slider is in communication with a second upper motor via an upper sliding joint;
      wherein the lower slider is in communication with a second lower motor via a lower sliding joint;
      wherein the upper sliding joint and lower sliding joint are each affixed to a bearing frame;
      a first plurality of sensors affixed to the bearing frame, configured to measure the position of the journal shaft horizontally and vertically;
      the first plurality of sensors in communication with a first controller, such that the first controller has data comprising the horizontal and vertical position of the journal shaft;
      a second plurality of sensors affixed to the upper pad and the lower pad, configured to measure the position of the upper pad and lower pad horizontally and vertically;
      the second plurality of sensors in communication with a second controller, such that the second controller has data comprising the horizontal and vertical positions of the upper pad and lower pad;
      the first controller and second controller in communication with a model;
      the model comprising a database of reference values and configured to compare a first set of data from the first controller to the reference values and compare a second set of data from the second controller to the reference values; and
      wherein the model realigns the journal and bearing according to the comparisons.
14. The system of clause 13, wherein the first plurality of sensors comprises:
   a central horizontal sensor configured to measure the position of the journal shaft horizontally; and
   a central vertical sensor configured to measure the position of the journal shaft vertically.
15. The system of clause 13 or clause 14, wherein the second plurality of sensors comprises:
   an upper horizontal sensor affixed to the upper pad and configured to measure the position of the upper pad horizontally;
   an upper vertical sensor affixed to the upper pad and configured to measure the position of the upper pad vertically;
   a lower horizontal sensor affixed to the lower pad and configured to measure the position of the lower pad horizontally; and
   a lower vertical sensor affixed to the lower pad and configured to measure the position of the lower pad vertically.

What has been described above includes examples of one or more embodiments. It is, of course, not possible to describe every conceivable modification and alteration of the above devices or methodologies for purposes of describing the aforementioned aspects, but one of ordinary skill in the art can recognize that many further modifications and permutations of various aspects are possible. Accordingly, the described aspects are intended to embrace all such alterations, modifications, and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. An adaptive fluid-film bearing, comprising:
an upper pad disposed opposite a lower pad, such that the two pads together circumscribe a journal shaft;
wherein the lower pad is mounted on a rotatable lower screw;
the rotatable lower screw affixed to a conical thrust roller bearing;
the thrust roller bearing affixed to a lower bearing slider;
wherein the lower screw is in communication with a first lower motor via gear joint, such that the first lower motor rotates the lower screw;
wherein the first lower motor is mounted in the lower bearing slider;
wherein the upper pad is mounted on a lower side of a rotatable upper screw;
the upper screw affixed to an upper bearing slider;
the upper screw in communication with a first upper motor via gear joint, such that the first upper motor rotates the upper screw;
wherein the upper slider is in communication with a second upper motor via an upper sliding joint;
wherein the lower slider is in communication with a second lower motor via a lower sliding joint;
wherein the upper sliding joint and the lower sliding joint are each affixed to a bearing frame;
a first plurality of sensors affixed to the bearing frame, configured to measure the position of the journal shaft horizontally and vertically;
the first plurality of sensors in communication with a first controller, such that the first controller has data comprising the horizontal and vertical position of the journal shaft;
a second plurality of sensors affixed to the upper pad and the lower pad, configured to measure the position of the upper pad and lower pad horizontally and vertically;
the second plurality of sensors in communication with a second controller, such that the second controller has data comprising the horizontal and vertical positions of the upper pad and lower pad;
the first controller and second controller in communication with a model;
the model configured to compensate for displacement along the journal shaft.

2. The adaptive fluid film bearing of claim 1, wherein the first plurality of sensors comprises:
a central horizontal sensor configured to measure the position of the journal shaft horizontally; and
a central vertical sensor configured to measure the position of the journal shaft vertically.

3. The adaptive fluid film bearing of claim 1 or claim 2, wherein the second plurality of sensors comprises an upper horizontal sensor, an upper vertical sensor, a lower horizontal sensor, and a lower vertical sensor.

4. The adaptive fluid film bearing of claim 3, further comprising:
the upper horizontal sensor affixed to the upper pad and configured to measure the position of the upper pad horizontally;
the upper vertical sensor affixed to the upper pad and configured to measure the position of the upper pad vertically;
the lower horizontal sensor affixed to the lower pad and configured to measure the position of the lower pad horizontally; and
the lower vertical sensor affixed to the lower pad and configured to measure the position of the lower pad vertically.

5. The adaptive fluid film bearing of any preceding claim, wherein each motor is a servo motor.

6. The adaptive fluid film bearing of any preceding claim, wherein the gear j oint is a worm gear joint.

7. The adaptive fluid film bearing of any of claims 2 to 6, wherein the central horizontal sensor is disposed atop the bearing frame and central vertical sensor is disposed along a side of the bearing frame.

8. A method of active alignment of a shaft-train, comprising:
creating a database of lookup values comprised of values associated with a bearing;
creating a model of reference values comprised of a position of a journal and an upper and lower bearing pad around the journal;
wherein the reference values are created from a static placement of the journal during initial operation of the train;
during operation, receiving from a first plurality of sensors, a first set of data comprising the position of the journal shaft at a bearing;
receiving from a second plurality of sensors, a second set of data comprising the position of an upper pad of the bearing and the position of a lower pad of the bearing;
comparing the received data to the reference values;
realigning the journal and bearings according to the database of lookup values.

9. The method of claim 8, wherein the first plurality of sensors comprises:
a central horizontal sensor configured to measure the position of the journal shaft horizontally; and
a central vertical sensor configured to measure the position of the journal shaft vertically.

10. The method of claim 8 or claim 9, wherein the second plurality of sensors comprises:
an upper horizontal sensor affixed to the upper pad and configured to measure the position of the upper pad horizontally;
an upper vertical sensor affixed to the upper pad and configured to measure the position of the upper pad vertically;
a lower horizontal sensor affixed to the lower pad and configured to measure the position of the lower pad horizontally; and
a lower vertical sensor affixed to the lower pad and configured to measure the position of the lower pad vertically.

11. The method of any of claims 8 to 10, wherein the first set of data comprises the horizontal and vertical positions of the journal shaft.

12. The method of any of claims 8 to claim 11, wherein the second set of data comprises the horizontal and vertical positions of the upper and lower pads.

13. An adaptive fluid film bearing shaft-train system comprising:
a shaft train comprising a journal shaft;
one or more bearings disposed along the journal shaft;
each bearing comprising:
an upper pad disposed opposite a lower pad, such that the two pads together circumscribe the journal shaft;
wherein the lower pad is mounted on a rotatable lower screw;
the rotatable lower screw affixed to a conical thrust roller bearing;
the thrust roller bearing affixed to a lower bearing slider;
wherein the lower screw is in communication with a first lower motor via gear joint, such that the first lower motor rotates the lower screw;
wherein the first lower motor is mounted in the lower bearing slider;
wherein the upper pad is mounted on a lower side of a rotatable upper screw;
the upper screw affixed to an upper bearing slider;
the upper screw in communication with a first upper motor via gear joint, such that the first upper motor rotates the upper screw;
wherein the upper slider is in communication with a second upper motor via an upper sliding joint;
wherein the lower slider is in communication with a second lower motor via a lower sliding joint;
wherein the upper sliding joint and lower sliding joint are each affixed to a bearing frame;
a first plurality of sensors affixed to the bearing frame, configured to measure the position of the journal shaft horizontally and vertically;
the first plurality of sensors in communication with a first controller, such that the first controller has data comprising the horizontal and vertical position of the journal shaft;
a second plurality of sensors affixed to the upper pad and the lower pad, configured to measure the position of the upper pad and lower pad horizontally and vertically;
the second plurality of sensors in communication with a second controller, such that the second controller has data comprising the horizontal and vertical positions of the upper pad and lower pad;
the first controller and second controller in communication with a model;
the model comprising a database of reference values and configured to compare a first set of data from the first controller to the reference values and compare a second set of data from the second controller to the reference values; and
wherein the model realigns the journal and bearing according to the comparisons.

14. The system of claim 13, wherein the first plurality of sensors comprises:
a central horizontal sensor configured to measure the position of the journal shaft horizontally; and
a central vertical sensor configured to measure the position of the journal shaft vertically.

15. The system of claim 13 or claim 14, wherein the second plurality of sensors comprises:
an upper horizontal sensor affixed to the upper pad and configured to measure the position of the upper pad horizontally;
an upper vertical sensor affixed to the upper pad and configured to measure the position of the upper pad vertically;
a lower horizontal sensor affixed to the lower pad and configured to measure the position of the lower pad horizontally; and
a lower vertical sensor affixed to the lower pad and configured to measure the position of the lower pad vertically.
